# EUROPEAN PATENT APPLICATION

(11) **EP 2 312 723 A2**
(43) Date of publication of application: **20.04.2011**
(21) Application number: 10251668.9
(22) Date of filing: 28.09.2010
(51) Int. Cl.: H02J 7/00, H01M 10/48

(54) **Battery pack, and method of controlling operation of data flash**

(30) Priority: 28.09.2009 KR 20090091778
(71) Applicant: Samsung SDI Co., Ltd., Yongin-si, Gyeonggi-do (KR)
(72) Inventor: Yang, Jong-Woon, Yongin-si Gyeonggi-do (KR); Susumu, Segawa, Yongin-si Gyeonggi-do (KR); Park, In-Kyu, Seoul 137-875 (KR); Testuya, Okada, Yongin-si Gyeonggi-do (KR)
(74) Representative: Mounteney, Simon James

(57) **Abstract**

A method of controlling the operation of a data flash and a battery pack capable of performing the method. In the method, writing, copying, and deleting operations are performed on two data flashes according to status flags recorded in predetermined respective locations of the data flashes. If one of the data flashes is full of data, it is possible to prevent a data flash failure from occurring when a part of the data is copied from the data flash to the other data flash or the data is deleted from the data flash.

## Description

### BACKGROUND

### 1. Field

The present invention relates to a method of controlling operation of a data flash and a battery pack configured to perform the method.

### 2. Description of the Related Art

Rechargeable or secondary batteries may be used to power various portable electronic devices such as cellular phones, notebooks, camcorders, and personal digital assistants (PDAs). Secondary batteries include various types of batteries, e.g., nickel-cadmium batteries, lead acid batteries, nickel metal hydride batteries (NiMH), lithium ion batteries, lithium polymer batteries, metal lithium batteries, and rechargeable zinc-air batteries. One or more secondary batteries may be combined with a circuit to form a battery pack, and may be charged and discharged via an external terminal of the battery pack.

The battery pack may include a battery cell and a peripheral circuit having a charging circuit/discharging circuit. The peripheral circuit may be manufactured in the form of a printed circuit board and then combined with the battery cell. When external electric power is supplied to the charging/discharging circuit via an external terminal of the battery pack, the battery cell may be charged with the electric power. Then, when a load is connected to the external terminal of the battery pack, the electric power charged in the battery cell may be supplied to the load via the charging/discharging circuit and the external terminal. The charging/discharging circuit may control charging or discharging of the battery cell via the external terminal.

### SUMMARY

The invention is directed to a method of controlling operation of a data flash and a battery pack configured to perform the method, which substantially overcome one or more of the problems due to limitations and disadvantages of the related art.

It is therefore a feature of an embodiment to provide a method of controlling the operation of a data flash in order to prevent a data flash failure, such as may be caused by abnormal resetting occurring when one of the data flashes is full of data and a part of data stored in the data flash is thus copied to the other data flash or the data is deleted from the data flash.

At least one of the above and other features and advantages may be realized by providing a method of controlling operations of a first data flash and a second data flash that are included in a microcomputer, the method including writing data to the first data flash; when the first data flash is full of data, copying a part of the data stored in the first data flash to the second data flash; and, when the copying of the part of the data to the second data flash has been completed, deleting the data stored in the first data flash,
wherein the writing of the data, the copying of the part of the data, and the deleting of the data are performed according to status flags stored in predetermined respective locations of the first data flash and second data flash.

The respective status flags of the first data flash and second data flash may indicate: whether data has been deleted from the first and second data flashes, whether data is being copied to the first and second data flashes, whether data has been copied to the first and second data flashes, or whether the first and second data flashes are in use.

When the status flag of the first data flash indicates that the first data flash is in use, the status flag of the second data flash indicates that data is being copied to the second data flash, and a reset event occurs, then the data that is being copied to the second data flash may be deleted, a part of the data stored in the first data flash may be copied to the second data flash, and the data may be deleted from the first data flash.

When the status flag of the first data flash indicates that the first data flash is in use, the status flag of the second data flash indicates that copying of data to the second data flash has been completed, and a reset event occurs, then the data stored in the first data flash may be deleted.

When the status flag of the first data flash indicates that the data stored in the first data flash has been deleted, the status flag of the second data flash indicates that copying of data to the second data flash has been completed, and a reset event occurs, then the data stored in the first data flash may be deleted.

The predetermined respective locations of the first and second data flashes may be the last 3 byte regions of the first and second data flashes, respectively.

The part of the data stored in the first data flash may be data lastly recorded in the first data flash.

The microcomputer may be included in a battery pack, the battery pack having at least one battery cell, and the first data flash and the second data pack may be used to store at least one of data and instructions relating to protecting the battery cell.

At least one of the above and other features and advantages may also be realized by providing A battery pack having at least one battery cell and a microcomputer for protecting the battery cell, the microcomputer including a first data flash for storing data protecting the battery cell, and storing a status flag indicating: whether data has been deleted from the first data flash, whether data is being copied to the first data flash, whether copying of data to the first data flash has been completed, or whether the first data flash is in use; a second data flash for storing data protecting the battery cell, and storing a status flag indicating: whether data has been deleted from the second data flash, whether data is being copied to the second data flash, whether copying of data to the second data flash has been completed, or whether the second data flash is in use; and a controller for controlling operations of the first and second data flashes according to the respective status flags stored in the first and second data flashes.

The controller may write data to the first data flash, copy a part of the data stored in the first data flash to the second data flash when the first data flash is full of data, and delete the data from the first data flash when the copying of the part of the data to the second data flash has been completed.

The part of the data stored in the first data flash may be data lastly recorded in the first data flash.

When the status flag of the first data flash indicates that the first data flash is in use, the status flag of the second data flash indicates that data is being copied to the second data flash, and a reset event occurs, then: the controller may delete the data that is being copied to the second data flash, copy a part of the data stored in the first data flash to the second data flash, and delete the data from the first data flash.

When the status flag of the first data flash indicates that the first data flash is in use, the status flag of the second data flash indicates that copying of data to the second data flash has been completed, and a reset event occurs, then: the controller may delete data stored in the first data flash.

When the status flag of the first data flash indicates that the data stored in the first data flash has been deleted, the status flag of the second data flash indicates that copying of data to the second data flash has been completed, and a reset event occurs, then: the controller may delete the data stored in the first data flash.

The status flags of the first and second data flashes may be the last 3 byte regions of the first and second data flashes, respectively.

At least one of the above and other features and advantages may also be realized by providing an article of manufacture including a computer readable recording medium, the recording medium having recorded thereon a program for executing a method according to an embodiment.

The above and other features of the invention are set out in the appended claims.

### BRIEF DESCRIPTION OF THE DRAWINGS

The above and other features and advantages will become more apparent to those of ordinary skill in the art upon making reference to the following embodiments of the invention which are described with reference to the attached drawings, in which:

FIG. 1 illustrates a circuit diagram of a battery pack according to an embodiment of the invention;

FIG. 2 illustrates a schematic block diagram of a microcomputer included in the battery pack of FIG. 1, according to an embodiment of the invention;

FIG. 3 illustrates exchange of data between storage devices included in the microcomputer of FIG. 2, according to an embodiment of the invention;

FIGS. 4A and 4B illustrate structures of data flashes according to embodiments of the invention;

FIG. 5 illustrates a diagram showing details of structures of data flashes; and

FIGS. 6A to 6E illustrate a method of controlling the operations of data flashes according to an embodiment of the invention.

### DETAILED DESCRIPTION

Korean Patent Application No. 10-2009-0091778, filed on September 28, 2009, in the Korean Intellectual Property Office, and entitled: "Battery Pack, and Method of Controlling Operation of Data Flash," is incorporated by reference herein in its entirety.

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art. In the drawing figures, the dimensions of layers and regions may be exaggerated for clarity of illustration. Like reference numerals refer to like elements throughout.

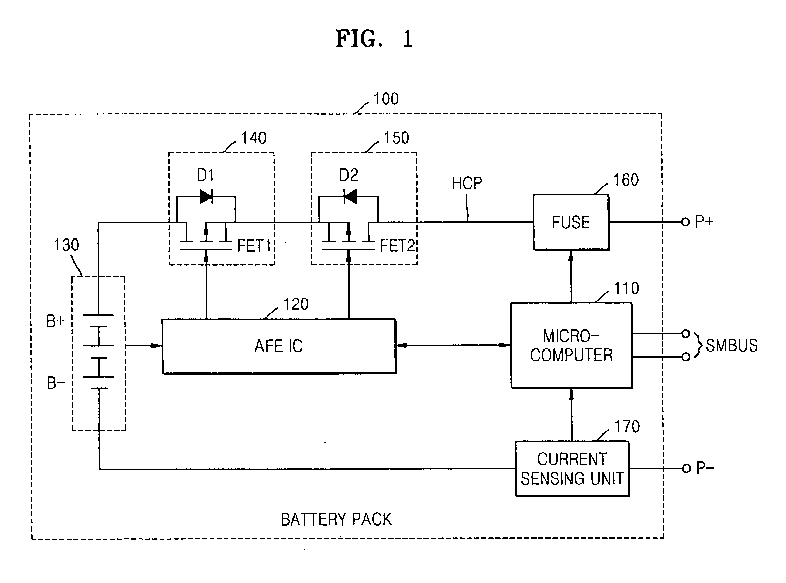

FIG. 1 illustrates a circuit diagram of a battery pack according to an embodiment of the invention. Referring to FIG. 1, the battery pack 100 includes a battery cell unit 130 and a protection circuit. The battery cell unit 130 is rechargeable. The battery pack 100 may be mounted into an external system, e.g., a portable notebook computer, in order to charge or discharge the battery cell unit 130. The battery cell unit 130 includes a plurality of battery cells.

The protection circuit includes a microcomputer 110, an analog front end (AFE) integrated circuit (IC) 120, an external terminal (not shown), a charging unit 140, a discharging unit 150, and a fuse 160. One terminal of the microcomputer 110 is connected to the AFE IC 120 and another terminal thereof is connected to the fuse 160. The AFE IC 120 is connected in parallel to the battery cell unit 130, the charging unit 140, and the discharging unit 150. The charging unit 140 and the discharging unit 150 may be connected in series to a heavy current path (HCP) between the battery cell unit 130 and the external terminal. The fuse 160 is connected in series to the HCP between the external terminal and the discharging unit 150. The protection circuit of the battery pack 100 further includes a current sensing unit 170 that is connected in series to the HCP between the battery cell unit 130 and the external terminal and is also connected to the microcomputer 110. The protection circuit of the battery pack 100 further includes a self-protection controller (not shown) that serves to blow the fuse 160 under the control of either the microcomputer 110 or the external system. If it is determined that the battery cell unit 130 is overcharged or over-discharged, then the microcomputer 110 may turn off the charging unit 140, the discharging unit 150, or blow the fuse 160, so that the battery cell unit 130 cannot be charged or discharged any further. That is, when it is determined that the battery cell unit 130 is overcharged or over-discharged, the microcomputer 110 may output a control signal corresponding to said determination in order to blow the fuse 160 by using, e.g., a control switch (not shown) or a heater (not shown).

The battery pack 100 may be connected to the external system via the external terminal in order to be charged or discharged. The HCP between the external terminal and the battery cell unit 130 may be used as a charging/discharging path via which a relatively high current flows. The battery pack 100 further includes a system management bus (SMBUS) between the microcomputer 110 and the external terminal of the protection circuit in order to communicate with the external system, e.g., to communicate with the portable notebook computer or other device powered by the battery pack 100.

The external system connected to the battery pack 100 via the external terminal may be a portable electronic device, e.g., a portable notebook computer, and may additionally include a power adapter, e.g., an A/C-D/C converter, for supplying power thereto. If the external system is connected with the power adapter, then the external system may operate by the power adapter and electric power may be supplied to the battery cell unit 130 from the power adapter via the external terminal along the HCP, thereby charging the battery cell unit 130 with electric power from the power adapter. If the external system is separated from the power adapter, the electric power may be discharged from the battery cell unit 130 to a load of the external system via the external terminal. Thus, when the external system that is connected with the power adapter is connected to the external terminal of the battery pack 100, a charging operation may be performed. In this case, the electric power may be charged from the power adapter to the external terminal, the discharging unit 150, the charging unit 140, and finally, to the battery cell unit 130. When the power adapter is separated from the external system and the load of the external system is connected to the external terminal, a discharging operation may be performed. In this case, the electric power may be discharged from the battery cell unit 130 to the charging unit 140, the discharging unit 150, the external terminal, and finally, to the load of the external system.

Referring to FIG. 1, the battery cell unit 130 is a secondary (rechargeable) battery cell in which B+ and B- denote an input terminal, to which a large current is supplied, and an output terminal, from which a large current is output, respectively. The battery cell unit 130 may transmit various information regarding the inside thereof, e.g., the temperature and voltage of the battery cell unit 130, and cell-related information, e.g., the amount of current flowing through the battery cell unit 130, to the AFE IC 120.

The charging unit 140 and the discharging unit 150 are connected in series to the HCP between the external terminal and the battery cell unit 130 in order to charge or discharge the battery pack 100. Each of the charging unit 140 and the discharging unit 150 includes a field effect transistor FET and a parasitic diode D. Thus, the charging unit 140 includes a field effect transistor FET1 and a parasitic diode D1, and the discharging unit 150 includes a field effect transistor FET2 and a parasitic diode D2. A source and drain of the field effect transistor FET1 of the charging unit 140 are disposed in a direction opposite to a direction in which those of the field effect transistor FET2 of the discharging unit 150 are disposed. Thus, the field effect transistor FET1 of the charging unit 140 may prevent current from flowing from the external terminal to the battery cell unit 130, and the field effect transistor FET2 of the discharging unit 150 may prevent current from flowing from the battery cell unit 130 to the external terminal. The respective field effect transistors FET1 and FET2 of the charging and discharging unit 140 and 150 may be used for switching devices, although various electric devices that can perform a switching operation may be used instead of the field effect transistors FET1 and FET2. The respective parasitic diodes D1 and D2 of the charging unit 140 and discharging unit 150 are constructed such that current flows therethrough in only one direction.

The AFE IC 120 is connected in parallel to the battery cell unit 130, the charging unit 140, and the discharging unit 150, and is connected in series between the battery cell unit 130 and the microcomputer 110. The AFE IC 120 may detect the voltage of the battery cell unit 130, transmit the voltage detection result to the microcomputer 110, and control the operations of the charging unit 140 and the discharging unit 150 under the control of the microcomputer 110.

For example, when the battery cell unit 130 is connected with an external system connected with a power adapter, the AFE IC 120 may turn on the field effect transistor FET1 of the charging unit 140 and the field effect transistor FET2 of the discharging unit 150 so that the battery cell unit 130 can be charged. Similarly, when the battery cell unit 130 is connected with a load, the AFE IC 120 may turn on the field effect transistor FET2 of the discharging unit 150 so that the battery cell unit 130 may be discharged.

The microcomputer 110 may be an IC that is connected in series between the AFE IC 120 and the external system. The microcomputer 110 may control the charging unit 140 and the discharging unit 150 via the AFE IC 120, thereby preventing the battery cell unit 130 from being overcharged, being over-discharged, or being supplied with overcurrent. The microcomputer 110 may compare the voltage of the battery cell unit 130, which is indicated in the detection result received from the AFE IC 120, with an overcharge voltage set in the microcomputer 110, and may then transmit a control signal (according to the comparison result) to the AFE IC 120 in order to turn on or off the charging unit 140 and the discharging unit 14. Accordingly, it may be possible to prevent the battery cell unit 130 from being overcharged, being over-discharged, or being supplied with overcurrent.

In an example implementation, if the voltage of battery cell unit 130 is equal to or greater than an overcharge voltage, e.g., 4.35 V, then the microcomputer 110 determines that the battery cell unit 130 is overcharged and transmits a control signal according to the voltage determination result to the AFE IC 120 in order to turn off the field effect transistor FET1 of the charging unit 140. Then, the battery cell unit 130 is prevented from being charged by the power adapter connected with the external system. In this case, the parasitic diode D1 of the charging unit 140 allows the battery pack 100 to be discharged even though the field effect transistor FET1 of the charging unit 140 is turned off. In contrast, if the voltage of the battery cell unit 130 is less than an over-discharge voltage set in the microcomputer 110, e.g., 2.30 V, then the microcomputer 110 determines that the battery cell unit 130 is over-discharged and transmits a control signal according to the voltage determination result to the AFE IC 120 in order to turn off the field effect transistor FET2 of the discharging unit 150. Then, discharging is prevented from occurring from the battery cell unit 130 to the load of the external system. In this case, the parasitic diode D2 of the discharging unit 150 allows the battery pack 100 to be charged even though the field effect transistor FET2 of the discharging unit 150 is turned off.

The microcomputer 110 may communicate with the external system via the SMBUS. Thus, the microcomputer 110 may receive information regarding the battery cell unit 130, e.g., the voltage of the battery cell unit 130, from the AFE IC 120, and may provide the information to the external system. The information regarding the battery cell unit 130 may be synchronized with a clock signal output from a clock line of the SMBUS and may be delivered to the external system via a data line of the SMBUS.

The current sensing unit 170 may sense current flowing through the battery pack 100. Information regarding the current sensed by the current sensing unit 170 may be supplied to the microcomputer 110. If overcurrent flows through the battery pack 100, the microcomputer 110 may output a control signal for breaking the flow of current in order to turn off the charging unit 140, the discharging unit 150, or the fuse 160, thereby preventing overcurrent from being supplied to the battery pack 100.

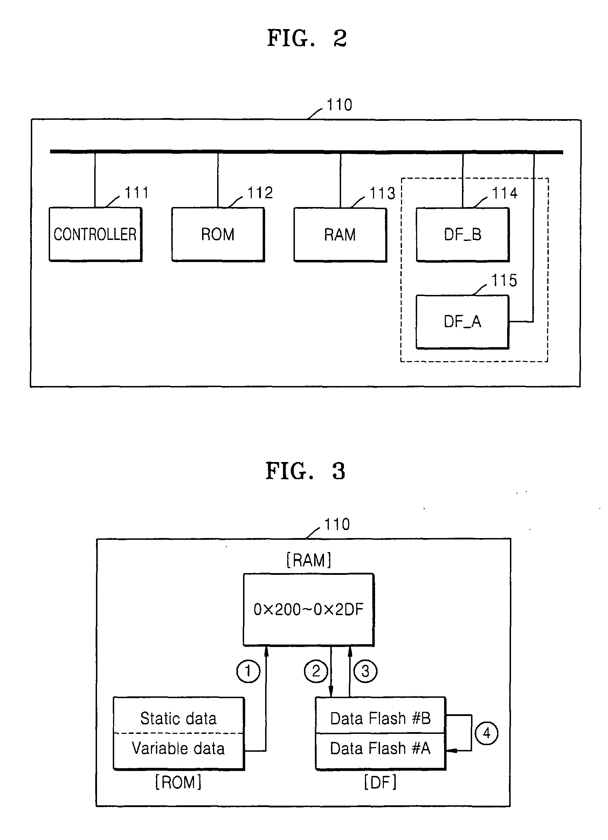

FIG. 2 illustrates a schematic block diagram of the microcomputer 110 included in the battery pack 100 of FIG. 1, according to an embodiment of the invention. FIG. 3 illustrates exchange of data between storage devices included in the microcomputer 110 of FIG. 2, according to an embodiment of the invention.

Referring to FIG. 2, the microcomputer 110 includes a controller 111, a read only memory (ROM) 112, a random access memory (RAM) 113, a data flash_B DF_B 114, and a data flash_A DF_A 115. The data flashes may be used to store data and/or instructions for management of the battery pack. The controller 111, the ROM 112, the RAM 113, the data flash_B DF_B 114, and the data flash_A DF_A 115 are connected via a data bus, as shown by the solid lines in FIG. 2.

In an example implementation, the microcomputer 110 uses two data flash regions: the data flash_B DF_B 114 and the data flash_A DF_A 115. For example, when the data flash_B DF_B 114 is full of data, latest data is copied from the data flash_B DF_B 114 to the data fIash_A DF_A 115 and the data is deleted from the data flash_BDF_B 114.

The microcomputer 110 may control the overall operations of the protection circuit of the battery pack 100. As described below, examples of writing, copying, and erasing operations performed among the ROM 112, the RAM 113, the data flash_B DF_B 114, and the data flash_A DF_A 115 of the microcomputer 110 are set forth with reference to FIG. 3.

Referring to FIGS. 2 and 3, static data and variable data may be stored in the ROM 112. In an example implementation, a data flash (DF) initial value, i.e., variable data, is copied to the RAM 113 during an initial resetting operation. The DF initial value copied to the RAM 113 is written to the data flash_B DF_B 114 during the initial resetting operation at predetermined intervals of time, e.g., at intervals of ten seconds. During a resetting operation, latest data is reloaded from the data flash_B DF_B 114 to the RAM 113. If the data flash_B DF_B 114 is full of data, the latest data is copied to the data flash_A DF_A 115 from the data flash_B DF_B 114 and then the data stored in the data flash_B DF_B 114 is deleted.

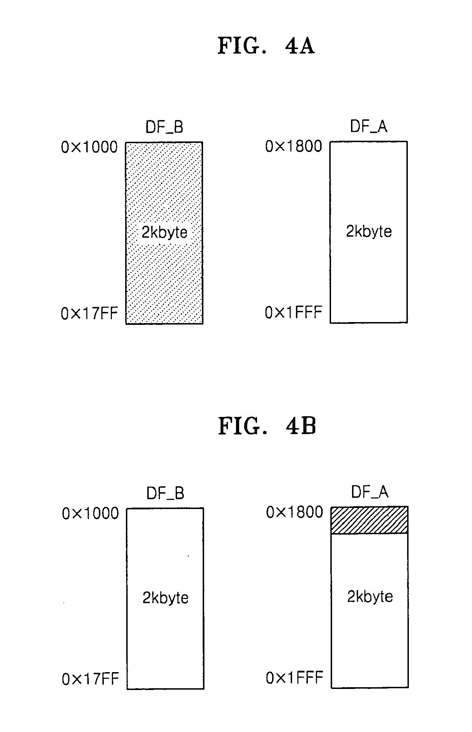

FIGS. 4A and 4B illustrate structures of data flashes DF_A and DF_B according to embodiments of the invention, as described above with reference to FIGS. 2 and 3. The data flashes DF_A and DF_B may each be, e.g., a flash memory, another type of non-volatile memory, etc. FIGS. 4A and 4B illustrate two data flashes of 2Kbyte each, e.g., data flashes DF_B of 2Kbyte and DF_A of 2Kbyte.

In an example implementation, if the data flash DF_B becomes full of data during the writing of data thereto as illustrated in FIG. 4A, then only a part of the data stored in the data flash DF_B, e.g., latest data, is copied to the data flash DF_A and the data is deleted from the data flash DF_B as illustrated in FIG. 4B. However, absent additional preventative measures, when resetting occurs during the copying of the latest data to the data flash DF_A or during the deleting of the data from the data flash DF_B, the copying or the deleting may not be satisfactorily completed and a data flash failure may occur.

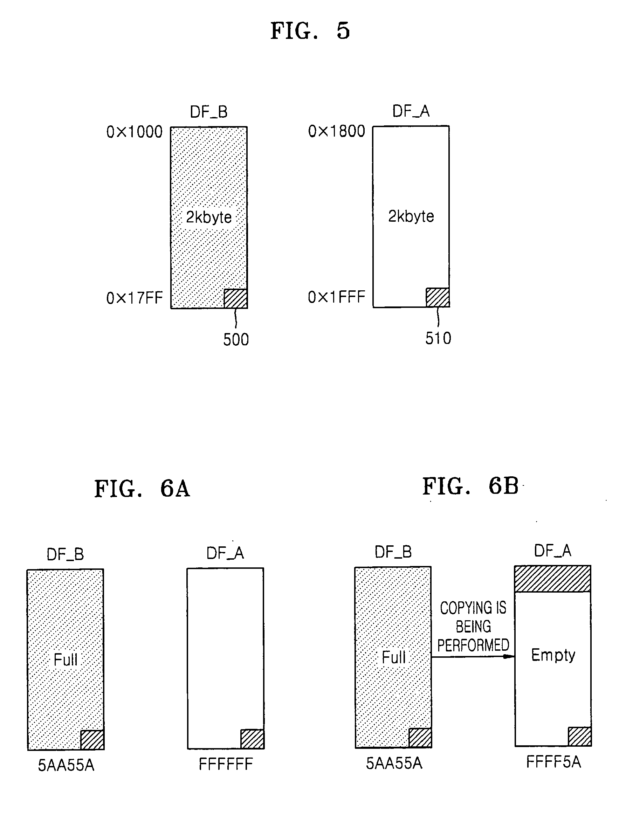

FIG. 5 illustrates a diagram showing details of structures of data flashes DF_A and DF_B. Referring to FIG. 5, a status flag indicating a current status of the data flash DF_A may be set and stored in a predetermined location 500 of the data flash DF_A, and a status flag indicating a current status of the data flash DF_B may be set and stored in a predetermined location 510 of the data flash DF_B. Thus, even if resetting occurs during a copying or erasing operation, the operations of the data flashes DF_A and DF_B may be controlled according to the status flags thereof. The status flags may be 3-byte, i.e., 24-bit (binary), corresponding to hexadecimal flags of six (6) digits. For example, a status flag may be FFFFFF (hex). The status flags may be stored in the data flashes DF_A and DF_B at, e.g., the last 3 byte regions of the data flashes DF_A and DF_B, respectively. The last 3 byte regions may be the highest-address regions of the data flashes DF_A and DF_B, respectively.

The respective status flags of the data flashes DF_A and DF_B may indicate whether:
--- data has been deleted from the data flashes DF_A and DF_B;
--- data is being copied to the data flashes DF_A and DF_B;
--- data has been copied to the data flashes DF_A and DF_B;
--- the data flashes DF_A and DF_B are in use.

For example:
--- if the status flag of the data flash DF_A is 'FFFFFF', then it may mean that data has been deleted from the data flash DF_A and the other data flash DF_B is in use or not in use;
--- if the status flag of the data flash DF_A is 'FFFF5A', then it may mean that effective data is being written to the data flash DF_A and the other data flash DF_B is full of data;
--- if the status flag of the data flash DF_A is 'FFA55A', then it may mean that the data flash DF_A is in use, that is, latest data has been copied to the data flash DF_A, and data is being deleted from the other data flash DF_B;
--- if the status flag of the data flash DF_A is '5AA55A, it may mean that the data flash DF_A is in use and data has been deleted from the other data flash DF_B.

In an example implementation, the controller 111 writes data to the data flash DF_B, copies a part of data stored in the data flash DF_B to the data flash DF_A when the data flash DF_B is full of data, and deletes the data from the data flash DF_B when the copying has been completed. Here, the controller 111 controls performing of writing, copying, and deleting operations according to the status flags written to the respective data flashes DF_B and DF_A. When a reset signal is sensed, the controller 111 controls the operations of the data flashes DF_B and DF_A according to the status flags written to the respective data flashes DF_B and DF_A.

More specifically, if the status flag of the data flash DF_A is 'FFFFFF', the status flag of the data flash DF_B is '5AA55A', and resetting occurs, then it is determined that the data flash DF_B is an effective data block and thus data does not need to be deleted from the data flash DF_B. If the status flag of the data flash DF_A is 'FFF5A', the status flag of the data flash DF_B is '5AA55A', and resetting occurs, then the data flash DF_B is determined to be an effective data block, a part of data which is being copied from the data flash DF_B to the data flash DF_A is deleted, another part of the data stored in the data flash DF_B is copied to the data flash DF_A, and the data stored in the data flash DF_B is deleted. If the status flag of the data flash DF_A is 'FFA55A', the status flag of the data flash DF_B is '5AA55A', and resetting occurs, then the data flash DF_A is determined to be an effective data block and data is deleted from the data flash DF_B. If the status flag of the data flash DF_A is 'FFA55A', the status flag of the data flash DF_B is 'FFFFFF, and resetting occurs, then the data flash DF_A is determined to be an effective data block and data is deleted from the data flash DF_B. If the status flag of the data flash DF_A is '5AA55A', the status flag of the data flash DF_B is 'FFFFFF', and resetting occurs, then the data flash DF_A is determined to be an effective data block.

FIGS. 6A to 6E illustrate an example of a method of controlling the operations of data flashes DF_A and DF_B according to an embodiment of the invention.

In an example implementation of the method, shown in FIG. 6A, the data flash DF_B is full of data, a status flag of the data flash DF_B is '5AA55A', and a status flag of the data flash DF_A is 'FFFFFF'. In this case, when a reset signal is sensed, the controller 111 of FIG. 2 determines that the data flash DF_B is an effective data block and data does not need to be deleted from both the data flash DF_A and the data flash DF_B.

Referring to FIG. 6B, the data flash DF_B is full of data, a status flag of the data flash DF_B is '5AA55A', a part of data stored in the data flash DF_B is being copied to the data flash DF_A, and a status flag of the data flash DF_A is 'FFFF5A'. In this case, when a reset signal is sensed, the controller 111 determines that the data flash DF_B is an effective data block, deletes the part of the data being copied to the data flash DF_A, and copies another part of the data of the data flash DF_B to the data flash DF_A. When the copying has been completed, the data of the data flash DF_B is deleted.

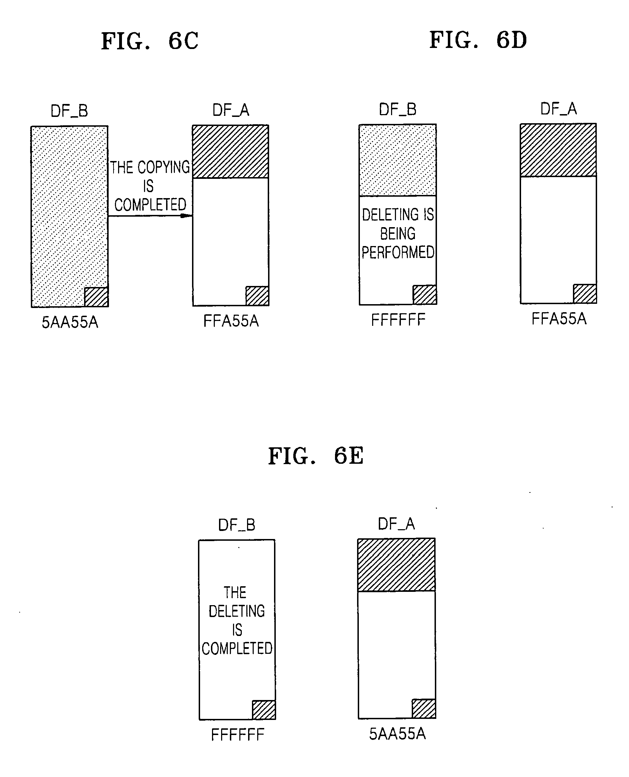

Referring to FIG. 6C, the data flash DF_B is full of data, a status flag of the data flash DF_B is '5AA55A', an effective part of data stored in the data flash DF_B has been completely copied to the data flash DF_A, and a status flag of the data flash DF_A is 'FFA55A'. In this case, when a reset signal is sensed, the controller 111 determines that the data flash DF_A is an effective data block and the data of the data flash DF_B is deleted.

Referring to FIG. 6D, data is being deleted from the data flash DF_B, a status flag of the data flash DF_B is 'FFFFFF', a part of the data stored in the data flash DF_B has been copied to the data flash DF_A, and a status flag of the data flash DF_A is 'FFA55A'. In this case, when a reset signal is sensed, the controller 111 determines that the data flash DF_A is an effective data block and the data being deleted from the data flash DF_B can continue to be deleted.

Referring to FIG. 6E, data has been deleted from the data flash DF_B, a status flag of the data flash DF_B is 'FFFFFF', a part of the data stored in the data flash DF_B has been copied to the data flash DF_A, and a status flag of the data flash DF_A is '5AA55A'. In this case, when a reset signal is sensed, the controller 111 determines that the data flash DF_A is an effective data block and no data needs to be deleted from both the data flash DF_A and the data flash DF_A.

In such a method according to the invention, it is possible to prevent a data flash failure from occurring during a resetting operation, and stably perform writing, copying, and deleting operations between two data flashes.

A method according to the invention may be embodied as computer readable code in a computer readable medium, e.g., an article of manufacture capable of storing data that is read by a computer system, e.g., a read-only memory (ROM), a random access memory (RAM), a compact disc (CD)-ROM, a magnetic tape, a floppy disk, an optical data storage device, and so on. The computer may be an information processing machine or processor such as the microcomputer 110 described above. The computer readable medium may be distributed among computer systems that are interconnected through a network, and the encoded method may be stored and implemented as computer readable code in the distributed system. Functional programs, codes, and code segments for accomplishing the encoded method may be easily constructed by computer programmers in the art.

According to the above-described embodiments of the invention, it may be possible to prevent a data flash failure caused by abnormal resetting occurring when one of data flashes is full of data and thus a part of data stored in the data flash is copied to the other data flash or the data is deleted from the data flash. In contrast, for a microcomputer in a conventional battery pack, using two data flashes, when one of the data flashes is full of data, latest data is copied from the data flash to the other data flash, and then the data is deleted from the data flash. However, when the battery pack is reset during copying or deleting of data, both the data flashes are in an unstable state, for example, data is written to both of the data flashes, thereby causing a failure of the data flashes. Such failures may be prevented by the above-described method of controlling operation of a data flash and a battery pack configured to perform the method according to embodiments of the invention. For example, in the method, writing, copying, and deleting operations may be performed on two data flashes according to status flags recorded in predetermined respective locations of the data flashes. Thus, if one of the data flashes is full of data, it is possible to prevent a data flash failure from occurring when a part of the data is copied from the data flash to the other data flash or the data is deleted from the data flash.

Embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A method of controlling operations of a first data flash and a second data flash that are included in a microcomputer, the method comprising:
writing data to the first data flash;
when the first data flash is full of data, copying a part of the data stored in the first data flash to the second data flash; and
when the copying of the part of the data to the second data flash has been completed, deleting the data stored in the first data flash,
wherein the writing of the data, the copying of the part of the data, and the deleting of the data are performed according to status flags stored in predetermined respective locations of the first data flash and second data flash.

2. A method as claimed in claim 1, wherein the respective status flags of the first data flash and second data flash indicate:
whether data has been deleted from the first and second data flashes,
whether data is being copied to the first and second data flashes,
whether data has been copied to the first and second data flashes, or
whether the first and second data flashes are in use.

3. A method as claimed in claim 2, wherein, when the status flag of the first data flash indicates that the first data flash is in use, the status flag of the second data flash indicates that data stored in the first data flash is being copied to the second data flash, and a reset event occurs, then:
the data that is being copied to the second data flash is deleted, a part of the data stored in the first data flash is copied to the second data flash, and the data is deleted from the first data flash.

4. A method as claimed in claim 2 or 3, wherein, when the status flag of the first data flash indicates that the first data flash is in use, the status flag of the second data flash indicates that copying of data to the second data flash has been completed, and a reset event occurs, then:
the data stored in the first data flash is deleted from the first data flash.

5. A method as claimed in claim 2, 3 or 4 wherein, when the status flag of the first data flash indicates that the data stored in the first data flash has been deleted, the status flag of the second data flash indicates that copying of data to the second data flash has been completed, and a reset event occurs, then:
no further data is deleted from either the first data flash or the second data flash until a further data operation is required.

6. A method as claimed in any preceding claim, wherein the predetermined respective locations of the first and second data flashes are the last 3 byte regions of the first and second data flashes, respectively.

7. A method as claimed in any preceding claim, wherein the part of the data stored in the first data flash is data lastly recorded in the first data flash.

8. A method as claimed in claim 1, wherein:
the microcomputer is included in a battery pack, the battery pack having at least one battery cell, and
the first data flash and the second data flash are used to store at least one of data and instructions relating to protecting the battery cell.

9. A battery pack having at least one battery cell and a microcomputer for protecting the battery cell, the microcomputer comprising:
a first data flash adapted to store data protecting the battery cell, and store a status flag indicating:
whether data has been deleted from the first data flash,
whether data is being copied to the first data flash,
whether copying of data to the first data flash has been completed, or
whether the first data flash is in use;
a second data flash adapted to store data protecting the battery cell, and store a status flag indicating:
whether data has been deleted from the second data flash,
whether data is being copied to the second data flash,
whether copying of data to the second data flash has been completed, or
whether the second data flash is in use; and
a controller for controlling operations of the first and second data flashes according to the respective status flags stored in the first and second data flashes.

10. A battery pack as claimed in claim 9, wherein the controller is adapted to write data to the first data flash, copy a part of the data stored in the first data flash to the second data flash when the first data flash is full of data, and delete the data from the first data flash when the copying of the part of the data to the second data flash has been completed.

11. A battery pack as claimed in claim 10, wherein the part of the data stored in the first data flash is data lastly recorded in the first data flash.

12. A battery pack as claimed in claim 9, 10 or 11 wherein, when the status flag of the first data flash indicates that the first data flash is in use, the status flag of the second data flash indicates that data is being copied to the second data flash, and a reset event occurs, then:
the controller is adapted to delete the data that is being copied to the second data flash, copy a part of the data stored in the first data flash to the second data flash, and delete the data from the first data flash.

13. A battery pack as claimed in claim 9, wherein, when the status flag of the first data flash indicates that the first data flash is in use, the status flag of the second data flash indicates that copying of data to the second data flash has been completed, and a reset event occurs, then:
the controller is adapted to delete data stored in the first data flash.

14. A battery pack as claimed in one of claims 9 to 13, wherein, when the status flag of the first data flash indicates that the data stored in the first data flash has been deleted, the status flag of the second data flash indicates that copying of data to the second data flash has been completed, and a reset event occurs, then:
the controller is adapted not to delete any data from the first data flash or the second data flash until a further data operation is required.

15. A battery pack as claimed in one of claims 9 to 14, wherein the status flags of the first and second data flashes are the last 3 byte regions of the first and second data flashes, respectively.
